# EUROPÄISCHE PATENTANMELDUNG

(11) **EP 2 090 847 A2**
(43) Veröffentlichungstag der Anmeldung: **19.08.2009**
(21) Anmeldenummer: 09100051.3
(22) Anmeldetag: 20.01.2009
(51) Int. Cl.: F24J 2/52

(54) **Befestigungsvorrichtung für die Befestigung von plattenförmigen Elementen, z.B. Solarpaneele**

(30) Priorität: 13.02.2008 DE 102008000293
(71) Anmelder: HILTI Aktiengesellschaft, 9494 Schaan (LI)
(72) Erfinder: Burtscher, Norbert, 6712 Thüringen (AT); Frommelt, Markus, 9494 Schaan (LI)

(57) **Zusammenfassung**

Eine Befestigungsvorrichtung (11) für die Befestigung von plattenförmigen Elementen (5) an einer Montageschiene (6) weist ein erstes Halteteil (12), ein zweites Halteteil (17), zwischen denen ein Aufnahmeraum (16) zur Aufnahme des plattenförmigen Elementes (5) vorgesehen ist, sowie ein Befestigungselement (27) auf. Das Befestigungselement (27) durchsetzt das erste Halteteil (12) sowie das zweite Halteteil (17) und ist zur Festlegung der Befestigungsvorrichtung (11) an der Montageschiene (6) mit einem in der Montageschiene (6) vorgesehenen Verankerungsmittel (29) in der Montageschiene (6) kuppelbar. Das erste Halteteil (12) ist relativ zu dem zweiten Halteteil (17) versetzbar. Zwischen dem ersten Halteteil (12) und dem zweiten Halteteil (17) ist ein die beiden Halteteile (12, 17) zueinander beabstandendes, federelastisches Element (32) vorgesehen.

## Beschreibung

Die Erfindung betrifft eine Befestigungsvorrichtung für die Befestigung von plattenförmigen Elementen an einer Montageschiene mit einem ersten Halteteil, mit einem zweiten Halteteil, zwischen denen ein Aufnahmeraum zur Aufnahme des plattenförmigen Elementes vorgesehen ist, sowie mit einem Befestigungselement, welches das erste Halteteil sowie das zweite Halteteil durchsetzt und welches zur Festlegung der Befestigungsvorrichtung an der Montageschiene mit einem in der Montageschiene vorgesehenen Verankerungsmittel in der Montageschiene kuppelbar ist, wobei das erste Halteteil relativ zu dem zweiten Halteteil versetzbar ist.

Um plattenförmige Elemente, wie Solarpaneele von Solaranlagen, auf Dachflächen, insbesondere nachträglich zu installieren, werden Tragsysteme aus Montageschienen vorgesehen, welche die einzelnen plattenförmigen Elemente beziehungsweise die Solarpaneele in einem Abstand zu der Dachbedeckung, wie Dachziegeln, aufnehmen. Mittels einzelner Befestigungsvorrichtungen sind die einzelnen plattenförmigen Elemente am Tragsystem fixiert. Die Montageschienen weisen beispielsweise selbst Verankerungsmittel auf, mit denen der Schaft des Befestigungselementes zur Festlegung der Befestigungsvorrichtungen an den Montageschienen kuppelbar ist. Der Schaft weist beispielsweise einen Gewindeabschnitt auf, der in ein Gegengewinde als Verankerungsmittel in der Montageschiene eingreift.

Aus der DE 102 33 973 A1 ist eine Befestigungsvorrichtung für die Befestigung von Solarpaneelen als plattenförmige Elemente an einer C-förmigen Montageschiene mit einer in Längserstreckung verlaufenden Aufnahmenut bekannt, die ein erstes Halteteil, ein zweites Halteteil, ein in die Aufnahmenut der Montageschiene einführbares und darin verdrehbares Hintergreifteil sowie ein Befestigungselement aufweist, welches das erste Halteteil und das zweite Halteteil durchsetzt. Das in die Aufnahmenut der Montageschiene einführbare Hintergreifteil weist als in der Montageschiene vorgesehenes Verankerungsmittel ein Gegengewinde auf, in das ein am Befestigungselement angeordneter Gewindeabschnitt eingreift. Das erste Halteteil ist relativ zu dem zweiten Halteteil versetzbar. Beim Verspannen der Befestigungsvorrichtung wird das Solarpaneel zwischen den Halteteilen eingeklemmt und die Befestigungsvorrichtung gleichzeitig an der Montageschiene fixiert. Zwischen dem ersten Halteteil und dem zweiten Halteteil ist eine Distanzhülse vorgesehen, die einen minimalen Abstand der Halteteile zueinander gewährleistet und im verspannten Zustand der Befestigungsvorrichtung eine zu hohe Pressung im Bereich der Fixierung auf das Solarpaneel verhindert.

Nachteilig an der bekannten Lösung ist, dass bei der Anordnung an einer Montageschiene das erste und das zweite Halteteil dazu tendieren, sich selbstständig auf den von der Distanzhülse vorbestimmten minimalen Abstand einzustellen. Dies erschwert die Montage des Solarpaneels, da dessen Rand in mehrere Befestigungsvorrichtungen eingefädelt werden muss. Insbesondere bei grossen Flächen und z. B. wenn mit einer Befestigungsvorrichtung zwei zueinander benachbarte Solarpaneele fixiert werden sollen, ist die Montage zeitintensiv und aufwändig. Zudem werden solche Solaranlagen oftmals auf Schrägdächern erstellt, so dass eine einfache Montage ein wesentliches Bedürfnis der Anwender darstellt.

Aufgabe der Erfindung ist es, eine Befestigungsvorrichtung für die Befestigung von plattenförmigen Elementen an einer eine Aufnahmenut aufweisenden Montageschiene zu schaffen, die eine einfache Montage und Fixierung der plattenförmigen Elemente erlaubt.

Die Aufgabe ist durch die Merkmale des unabhängigen Anspruchs gelöst. Vorteilhafte Weiterbildungen sind in den Unteransprüchen dargelegt.

Gemäss der Erfindung ist zwischen dem ersten Halteteil und dem zweiten Halteteil zumindest ein die beiden Halteteile zueinander beabstandendes, federelastisches Element vorgesehen.

Das zumindest eine federelastische Element drückt das erste Halteteil und das zweite Halteteil auseinander, wobei ein Mindestabstand zwischen dem ersten Halteteil und dem zweiten Halteteil im unverspannten Zustand der Befestigungsvorrichtung gewährleistet ist. Der Aufnahmeraum zwischen den beiden Halteteilen weist somit eine ausreichende Höhe für ein entsprechend ausgebildetes plattenförmiges Element auf, so dass die plattenförmigen Elemente, wie beispielsweise Solarpaneele, bequem in den Aufnahmeraum eingeführt und mit der Befestigungsvorrichtung an der Montageschiene fixierbar sind. Die einzelnen Teile beziehungsweise Elemente der Befestigungsvorrichtung sind vorteilhaft unverlierbar miteinander verbunden.

Beim Verspannen der Befestigungsvorrichtung wird das zumindest eine federelastische Element zwischen dem ersten Halteteil und dem zweiten Halteteil komprimiert, so dass der in den Aufnahmeraum eingefädelte Rand des plattenförmigen Elementes bereichsweise klemmend zwischen diesen Halteteilen fixiert ist.

Vorteilhaft sind jeweils an den einander zugewandten Seiten der Halteteile elastische Einlagen vorgesehen, welche im verspannten Zustand der Befestigungsvorrichtung mit den plattenförmigen Elementen in Anlage kommen und einen Kontakt der steifen Bereiche der Halteteile mit einem Randbereich des plattenförmigen Elementes verhindern und somit Beschädigungen an den plattenförmigen Elementen durch die Fixierung vermeiden.

Die Befestigungsvorrichtung ist entweder doppelseitig mit zwei parallel zueinander verlaufenden Aufnahmeräumen für zwei benachbart zueinander angeordnete, plattenförmige Elemente oder einseitig als End-Befestigungselement mit nur einem Aufnahmeraum für ein plattenförmiges Element ausgebildet.

Vorteilhaft weist die Befestigungsvorrichtung ein Hintergreifteil mit einem Verankerungsmittel für das Befestigungselement auf, womit die Befestigungsvorrichtung einfach und schnell in einer Aufnahmenut einer Montageschiene anordnenbar ist. Das Befestigungsmittel weist vorteilhaft einen Schaft auf, der vorteilhaft zumindest bereichsweise mit einem Gewindeabschnitt versehen ist, der mit dem Gegengewinde im Hintergreifteil als Verankerungsmittel in Eingriff bringbar ist. Die Befestigungsvorrichtung wird dem Anwender vorteilhaft vormontiert zur Verfügung gestellt. Das Hintergreifteil ist vorteilhaft drehfest und weiter vorteilhaft lösbar mit dem Schaft des Befestigungselementes gekoppelt. Das Hintergreifteil sowie z. B. ein gegenüberliegendes Ende des Befestigungselementes begrenzen die maximale Versetzbarkeit der beiden Halteteile zueinander.

Vorzugsweise ist das zumindest eine federelastische Element ein Elastomerkörper, der einfach komprimierbar ist und sich im entspannten Zustand auf ein ausreichend grosses, vorbestimmtes Mass ausdehnen kann. Alternativ ist das zumindest eine federelastische Element beispielsweise aus Moosgummi oder Neopren gefertigt oder ist ein Federelement aus Metall oder Kunststoff, z. B. in Form einer Blatt-, Spiral- oder Schraubenfeder.

Bevorzugt ragen von dem ersten Halteteil an der dem zweiten Halteteil zugewandten Seite zumindest ein erster Führungssteg und von dem zweiten Halteteil an der dem ersten Halteteil zugewandten Seite zumindest ein zweiter Führungssteg ab, wobei die Führungsstege miteinander überlappen und gegenseitig zueinander geführt sind. Somit sind die beiden Halteteile relativ zueinander geführt versetzbar. Gleichzeitig sind das erste Halteteil und das zweite Halteteil gegen eine Verdrehung z. B. um die Längsachse des Befestigungselementes relativ zueinander gesichert. Dadurch wird gewährleistet, dass die Halteteile während dem gesamten Montagevorgang parallel zum Rand des plattenförmigen Elementes ausgerichtet sind. Damit wird der Montageaufwand massgeblich reduziert, da eine Ausrichtung der Halteteile während oder nach dem Verspannen der Befestigungsvorrichtung nicht erforderlich ist.

Vorzugsweise ist das zumindest eine federelastische Element zwischen einem der freien Ränder beziehungsweise einer freien Stirnseite eines Führungssteges und dem gegenüberliegenden Halteteil vorgesehen, was eine einfache Herstellung der Befestigungsvorrichtung bei Gewährleistung einer hohen Montagefreundlichkeit gewährleistet.

Bevorzugt ist zwischen dem ersten Halteteil und dem zweiten Halteteil zumindest ein Distanzelement vorgesehen, das einen Mindestabstand zwischen diesen Halteteilen gewährleistet. Beim Verspannen der Befestigungsvorrichtung kommen das erste Halteteil und das zweite Halteteil mit dem zumindest einen Distanzelement in Anlage, womit bei einer entsprechend der Dicke des plattenförmigen Elementes gewählten Befestigungsvorrichtung die maximale Flächenpressung auf das fixierte plattenförmige Element begrenzt ist. Vorteilhaft ist das Distanzelement mehrteilig ausgebildet. Beispielsweise wird das Distanzelement von mehreren, analog einer Unterlegscheibe ausgebildeten Distanzscheiben gebildet, welche von dem Schaft des Befestigungselementes durchdrungen und dabei in ihrer Position in der Befestigungsvorrichtung gehalten sind.

In einer Variante dazu ist ein freier Rand beziehungsweise die freie Stirnseite zumindest eines der Führungsstege ein Anschlag zur Begrenzung der Versetzbarkeit des ersten Halteteils relativ zum zweiten Halteteil. Das zumindest eine federelastische Element ist dabei neben dem den Anschlag ausbildenden Führungssteg vorgesehen. Beim Verspannen des Befestigungselementes wird das federelastische Element komprimiert, bis der entsprechende freie Rand beziehungsweise die freie Stirnfläche des den Anschlag ausbildenden Führungssteges mit dem gegenüberliegenden Halteteil in Anlage kommt. Alternativ dazu weist der den Anschlag ausbildende Führungssteg Ausnehmungen auf, in denen das zumindest eine federelastische Element beim Verspannen des Befestigungselementes zu liegen kommt.

Die Erfindung wird nachstehend anhand von Ausführungsbeispielen näher erläutert. Es zeigen:
- Fig. 1: Ein erstes Ausführungsbeispiel einer Befestigungsvorrichtung im verspannten Zustand im Querschnitt;
- Fig. 2: die in Fig. 1 gezeigte Befestigungsvorrichtung im unverspannten Zustand im Längsschnitt;
- Fig. 3: ein zweites Ausführungsbeispiel einer Befestigungsvorrichtung in Perspektive;
- Fig. 4: ein drittes Ausführungsbeispiel einer Befestigungsvorrichtung im unverspannten Zustand im Längsschnitt; und
- Fig. 5: ein viertes Ausführungsbeispiel einer Befestigungsvorrichtung im unverspannten Zustand im Querschnitt.

Grundsätzlich sind in den Figuren gleiche Teile mit den gleichen Bezugszeichen versehen.

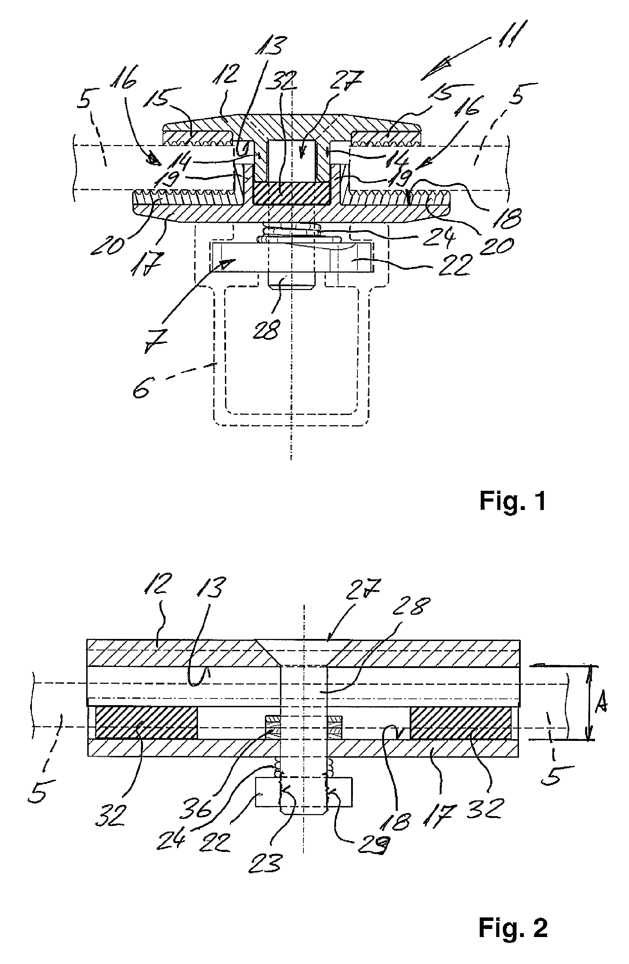

Die in den Figuren 1 und 2 dargestellte Befestigungsvorrichtung 11 in Form einer Mittelklemme für die Befestigung von plattenförmigen Elemente 5, wie Solarpaneele, an einer eine Aufnahmenut 7 aufweisenden Montageschiene 6, als Tragelement für die plattenförmigen Elementen 5, weist ein erstes Halteteil 12 als Niederhalteteil zum Halten des plattenförmigen Elementes 5, ein zweites Halteteil 17 als Auflagerteil für das plattenförmige Element 5, ein in die Aufnahmenut 7 der Montageschiene 6 einführbares und darin verdrehbares Hintergreifteil 22 sowie ein Befestigungselement 27 mit einen Schaft 28 auf. Der Schaft 28 des Befestigungselementes 27 durchsetzt das erste Halteteil 12 und das zweite Halteteil 17 und greift mit einem am Schaft 28 bereichsweise angeordneten Gewindeabschnitt 29 in ein am Hintergreifteil 22 vorgesehenes Innengewinde als in der Montageschiene vorgesehenes Verankerungsmittel 23 ein. Zwischen dem ersten Halteteil 12 und dem zweiten Halteteil 17 sind zwei Aufnahmeräume 16 zur Aufnahme von plattenförmigen Elementen 5 vorgesehen.

Von dem ersten Halteteil 12 ragen an der dem zweiten Halteteil 17 zugewandten Seite 13 zwei erste Führungsstege 14 und von dem zweiten Halteteil 17 an der dem ersten Halteteil 12 zugewandten Seite 18 ragen zwei zweite Führungsstege 19 ab. Die Führungsstege 14 und 19 überlappen einander, so dass bei einem Versetzen der Halteteile 12 und 17 relativ zueinander diese gegenseitig geführt sind.

Zwischen dem ersten Halteteil 12 und dem zweiten Halteteil 17 sind zwei, die beiden Halteteile 12 und 17 zueinander beabstandende Elastomerkörper als federelastische Elemente 32 vorgesehen. Die federelastischen Elemente 32 gewährleisten einen Mindestabstand A zwischen dem ersten Halteteil 12 und dem zweiten Halteteil 17 beziehungsweise eine ausreichenden Höhe des Aufnahmeraums 16 im unverspannten Zustand der Befestigungsvorrichtung 11, was ein einfaches Einführen des Randes des plattenförmigen Elementes 5 in die Aufnahmeräume 16 und somit eine einfache Montage gewährleistet. Die federelastischen Elemente 32 sind zwischen den freien Rändern der ersten Führungsstege 14 des ersten Halteteils 12 und dem zweiten Halteteil 17 vorgesehen.

Zur Begrenzung der Versetzbarkeit der Halteteile 12 und 17 relativ zueinander ist zwischen diesen ein den Schaft 28 des Befestigungselementes 27 umgebendes Distanzelement 36 vorgesehen. Das Distanzelement 36 ist mehrteilig ausgebildet und weist dazu mehrere Distanzscheiben auf, welche in Abhängigkeit der Dicke der zu befestigenden plattenförmigen Elemente 5 vorgesehen werden.

Damit die steifen Bereiche des ersten Halteteils 12 und des zweiten Halteteils 17 im verspannten Zustand der Befestigungsvorrichtung 11 mit den Rändern der plattenförmigen Elemente 5 diese nicht beschädigen, sind an diesen Bereichen jeweils elastische Einlagen 15 und 20 vorgesehen. Die elastischen Einlagen 20 am zweiten Halteteil 17 sind entlang den zweiten Führungsstegen 19 hochgezogen und bilden somit zusätzlich ein elastisches Lager für die plattenförmigen Elemente 5 in eine Richtung quer zur Verspannrichtung der Befestigungsvorrichtung 11 beziehungsweise quer in Richtung der Längsachse des Befestigungselementes 27.

Für eine einfache Montage der Befestigungsvorrichtung 11 an der Montageschiene 6 ist das Hintergreifteil 22 vorteilhaft drehfest an dem Befestigungselement 27 angeordnet. Weiter ist zwischen dem Hintergreifteil 22 und dem zweiten Halteteil 17 ein mit diesen Teilen verbundenes Federelement 24 vorgesehen, das das Hintergreifteil 22 in eine Ausrichtung relativ zu dem zweiten Halteteil 17 zwingt, in der das Hintergreifteil 22 im in die Aufnahmenut 7 der Montageschiene 6 eingeführten Zustand in eine die begrenzenden Ränder der Aufnahmenut 7 hintergreifenden Stellung ausgerichtet ist. Das Hintergreifteil 22 ist im Grundriss rechteckig ausgebildet und weist eine kurze Erstreckung (siehe Fig. 2) sowie eine lange Erstreckung (siehe Fig. 1) auf. Die kurze Erstreckung ist derart gewählt, dass das Hintergreifteil 22 an einer beliebigen Stelle in die Aufnahmenut 7 der Montageschiene 6 einführbar ist. Die lange Erstreckung ist derart gewählt, dass das Hintergreifteil 22 in der entsprechenden Ausrichtung die Ränder der Aufnahmenut 7 der Montageschiene 6 hintergreift.

Für die Befestigung der plattenförmigen Elemente 5 an der Montageschiene 6 wird zuerst das Hintergreifteil 22 in die Aufnahmenut 7 eingeführt und die Befestigungsvorrichtung 11 verdreht, so dass sie zur Aufnahme der Ränder der plattenförmigen Elemente 5 ausgerichtet ist. Mit dem in die Montageschiene eingeführten Hintergreifteil 22, welches ein Gegengewinde für den am Schaft 28 des Befestigungselementes 27 angeordneten Gewindeabschnitt 29 aufweist, wird in der Montageschiene 6 ein Verankerungsmittel 23 für die Festlegung der Befestigungsvorrichtung 11 an der Montageschiene 6 in der Montageschiene 6 vorgesehen, das mit dem Befestigungselement 27 kuppelbar ist.

Die federelastischen Elemente 32 gewährleisten einen ausreichenden Abstand zwischen dem ersten Halteteil 12 und dem zweiten Halteteil 17 zum Einführen der Ränder der plattenförmigen Elemente 5 in die Aufnahmeräume 16. Wenn das Distanzelement 36 entsprechend der Dicke des zu befestigenden plattenförmigen Elementes 5 gewählt ist, ist im verspannten Zustand der Befestigungsvorrichtung 11 gewährleistet, dass die wirkende Flächenpressung auf das plattenförmige Element 5 einen bestimmten maximalen Wert nicht übersteigt.

Nach dem Einführen der Ränder der plattenförmigen Elemente 5 in den Aufnahmeraum 16 wird mittels des Befestigungselementes 27 die Befestigungsvorrichtung 11 verspannt, wobei das erste Halteteil 12 und das zweite Halteteil 17 relativ zueinander versetzt und der Randbereich der plattenförmigen Elemente 5 zwischen diesen Halteteilen 12 und 17 eingeklemmt wird. Gleichzeitig wird das Hintergreifteil 22 relativ zu dem zweiten Halteteil 17 versetzt beziehungsweise verschoben, wobei die Befestigungsvorrichtung 11 an der Montageschiene 6 verspannt wird.

Anstelle eines Hintergreifteils mit einem Verankerungsmittel kann beispielsweise die Montageschiene selbst ein Verankerungsmittel für ein entsprechend ausgebildetes Befestigungselement aufweisen, damit die Befestigungsvorrichtung an dieser Montageschiene festlegbar ist. Das Verankerungsmittel kann dabei Bestandteil der Montageschiene, z. B. einteilig mit dieser ausgebildet, oder an einem separaten Element vorgesehen sein, das bedarfsweise an und/oder in der Montageschiene vorgesehen wird.

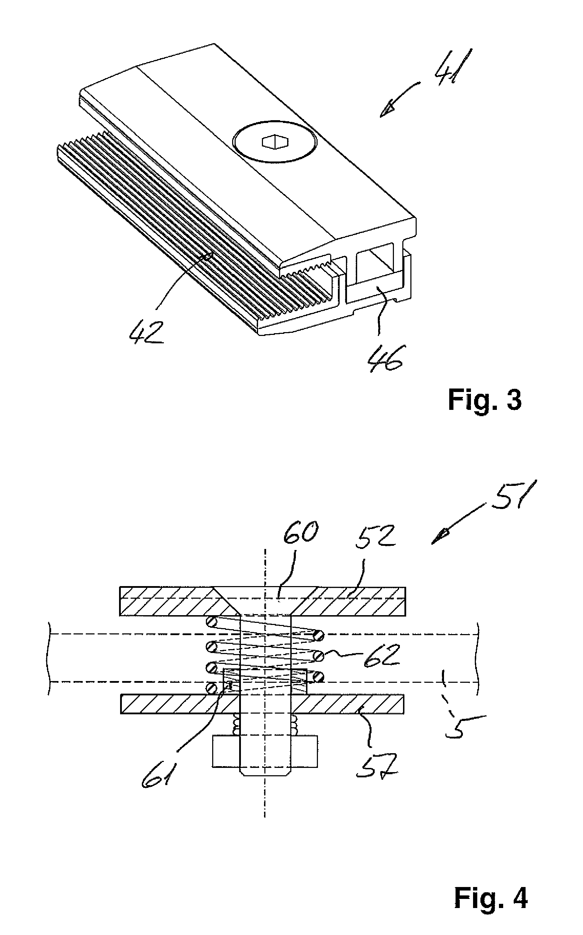

In der Figur 3 ist eine Befestigungsvorrichtung 41 in Form eines Endbefestigers mit nur einem Aufnahmeraum 42 für den Rand eines plattenförmigen Elementes (hier nicht dargestellt) gezeigt. Das hier dargestellte federelastische Element 46 ist ein quaderförmiger Körper aus Moosgummi. Ansonsten entspricht der Aufbau der Befestigungsvorrichtung 41 im Wesentlichen dem Aufbau der zuvor beschriebenen Befestigungsvorrichtung 11.

In der Figur 4 ist als eine Alternative zur Befestigungsvorrichtung 11 eine Befestigungsvorrichtung 51 mit einer Schraubenfeder aus Federstahl als federelastisches Element 62 gezeigt, das zwischen dem ersten Halteteil 52 und dem zweiten Halteteil 57 vorgesehen ist. Das federelastische Element 62 umgibt wie das einteilige, hülsenförmige Distanzelement 61 das Befestigungselement 60. Die Halteteile 52 und 57 sind im Wesentlichen plattenförmig ausgebildet und weisen keine von diesen abragende, einander zugewandte Führungsstege auf.

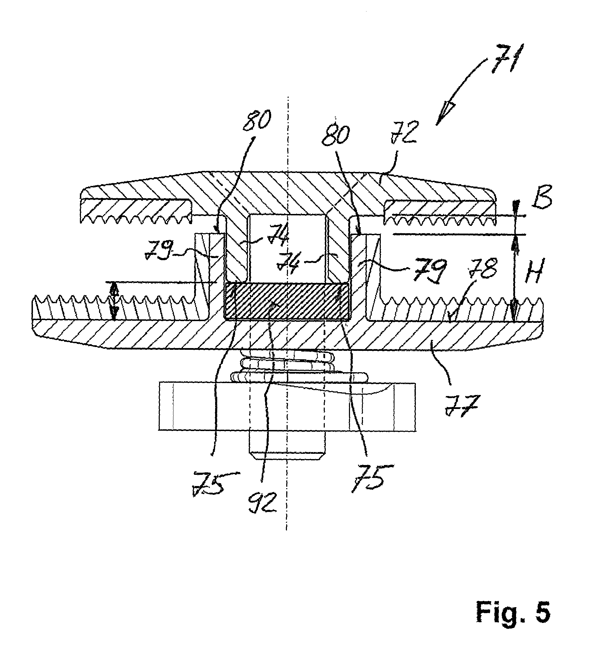

In der Figur 5 ist als Mittelklemme eine Alternative zur Befestigungsvorrichtung 11 eine Befestigungsvorrichtung 71 gezeigt, bei der das zweite Halteteil 77 zwei von der Seite 18 abragende zweite Führungsstege 79 mit einer Höhe H aufweist. Die Höhe H der zweiten Führungsstege 79 ist grösser als die entsprechende Höhe der von dem ersten Halteteil 72 abragenden ersten Führungsstege 74. Im unverspannten Zustand der Befestigungsvorrichtung 71 ist der Abstand B zwischen dem freien Rand 80 beziehungsweise der freien Stirnseite des zweiten Führungssteges 79 zu einer gegenüberliegenden Fläche des ersten Halteteils 72 kleiner als der Abstand C zwischen dem freien Rand 75 beziehungsweise der freien Stirnseite des ersten Führungssteges 74 zu einer gegenüberliegenden Fläche des zweiten Halteteils 77. Der freie Rand 80 der zweiten Führungsstege 79 bildet einen Anschlag zur Begrenzung der Versetzbarkeit des ersten Halteteils 72 relativ zum zweiten Halteteil 77. Ein federelastisches Element 92 ist zwischen den freien Rändern 75 der ersten Führungsstege 74 und dem gegenüberliegenden zweiten Halteteil 77 vorgesehen. Beim Verspannen der Befestigungsvorrichtung 71 wird die federelastische Einlage 92 komprimiert, bis der freie Rand 80 der zweiten Führungsstege 79 mit den entsprechenden Flächen des ersten Halteteils 72 in Anlage kommen, womit eine weitere Versetzung beziehungsweise Verschiebung des ersten Halteteils 72 relativ zum zweiten Halteteil 77 verhindert ist.

## Patentansprüche

1. Befestigungsvorrichtung für die Befestigung von plattenförmigen Elementen (5) an einer Montageschiene (6) mit einem ersten Halteteil (12; 52; 72), mit einem zweiten Halteteil (17; 57; 77), zwischen denen ein Aufnahmeraum (16; 42) zur Aufnahme des plattenförmigen Elementes (5) vorgesehen ist, sowie mit einem Befestigungselement (27; 60), welches das erste Halteteil (12; 52; 72) sowie das zweite Halteteil (17; 57; 77) durchsetzt und welches zur Festlegung der Befestigungsvorrichtung (11; 41; 51; 71) an der Montageschiene (6) mit einem in der Montageschiene (6) vorgesehenen Verankerungsmittel (23) in der Montageschiene (6) kuppelbar ist, wobei das erste Halteteil (12; 52; 72) relativ zu dem zweiten Halteteil (17; 57; 77) versetzbar ist, **dadurch gekennzeichnet, dass**
zwischen dem ersten Halteteil (12; 52; 72) und dem zweiten Halteteil (17; 57; 77) zumindest ein die beiden Halteteile (12, 17; 52, 57; 72, 77) zueinander beabstandendes, federelastisches Element (32; 46; 62) vorgesehen ist.

2. Befestigungsvorrichtung nach Anspruch 1, **dadurch gekennzeichnet, dass** das zumindest eine federelastische Element (32) ein Elastomerkörper ist.

3. Befestigungsvorrichtung nach Anspruch 1 oder 2, **dadurch gekennzeichnet, dass** von dem ersten Halteteil (12; 72) an der dem zweiten Halteteil (17; 77) zugewandten Seite (13) zumindest ein erster Führungssteg (14; 74) und von dem zweiten Halteteil (17; 77) an der dem ersten Halteteil (12) zugewandten Seite (18; 78) zumindest ein zweiter Führungssteg (19; 79) abragt, wobei die Führungsstege (14, 19; 74, 79) miteinander überlappen und gegenseitig zueinander geführt sind.

4. Befestigungsvorrichtung nach Anspruch 3, **dadurch gekennzeichnet, dass** das zumindest eine federelastische Element (32; 46; 92) zwischen einem der freien Ränder (75) eines Führungssteges (14; 74) und dem gegenüberliegenden Halteteil (17; 77) vorgesehen ist.

5. Befestigungsvorrichtung nach einem der Ansprüche 1 bis 4, **dadurch gekennzeichnet, dass** zwischen dem ersten Halteteil (12; 52) und dem zweiten Halteteil (17; 57) zumindest ein Distanzelement (36; 62) vorgesehen ist.

6. Befestigungsvorrichtung nach einem der Ansprüche 3 oder 4, **dadurch gekennzeichnet, dass** ein freier Rand (80) zumindest eines der Führungsstege (79) ein Anschlag zur Begrenzung der Versetzbarkeit des ersten Halteteils (72) relativ zum zweiten Halteteil (77) ist.
